# EUROPEAN PATENT SPECIFICATION

(11) **EP 3 911 452 B1**
(45) Date of publication and mention of the grant of the patent: **02.08.2023**
(21) Application number: 19817346.0
(22) Date of filing: 13.12.2019
(51) Int. Cl.: B60G 17/019, G10K 11/00, B06B 1/06

(54) **AIR SUSPENSION DEVICE COMPRISING AN ULTRASONIC TRANSDUCER DEVICE**
LUFTFEDERVORRICHTUNG MIT EINER ULTRASCHALLWANDLERVORRICHTUNG
DISPOSITIF D'AMORTISSEMENT PNEUMATIQUE COMPRENANT UN DISPOSITIF DE TRANSDUCTEUR ULTRASONORE

(30) Priority: 14.01.2019 EP 19465501
(43) Date of publication of application: 24.11.2021
(73) Proprietor: Continental Automotive Technologies GmbH, 30165 Hannover (DE)
(72) Inventor: DULF, Andrei, 65824 Schwalbach a. Ts. (DE)
(74) Representative: Continental Corporation
(86) International application number: PCT/EP2019/085170
(87) International publication number: WO 2020/148040

(56) References cited:
- DE-A1- 19 811 982
- JP-A- H10 206 528
- US-A- 6 032 535
- US-A1- 2009 015 101
- US-A1- 2017 326 592

## Description

The invention discloses an air suspension device comprising an ultrasonic transducer device according to claim 1.

Ultrasonic ranging is one of the common techniques to determine the distance to an object. Ultrasonic ranging is based on the time of flight method wherein the distance is calculated based on the time of flight between a transmission and a reception of a sound wave and the speed of sound of the sound wave. To determine the time of flight, an ultrasonic transducer device sends the sound wave in a predefined direction to the object. The sound wave is reflected by the object. The reflected sound wave is detected by the ultrasonic transducer device. Ultrasonic transducer devices comprise piezoelectric elements for sending and receiving the ultrasonic waves. To avoid an affection of electronic devices by vibrations originating from excitations of the piezoelectric element, the piezoelectric element is usually damped by a damping element placed between the piezoelectric element and a carrier element.

To transmit the sound wave the piezoelectric element is excited by a voltage over a predefined time of excitation. Even after the time of excitation the piezoelectric element continues to oscillate with a decaying amplitude. This effect is known as ringing. The time until the amplitude is below a predefined value is called the decay time or the ringing time. During the ringing time it is not possible to detect the reflected sound wave because it is not possible to distinguish between oscillations caused by the reflected sound wave and the oscillations caused by ringing. Thus the ringing time sets a lower limit for the time of flight that may be measured by the ultrasonic transducer device. As the time of flight is proportional to the distance, low distances cannot be measured by the ultrasonic transducer device.

US 2009/015101 A1 discloses an ultrasonic transducer having transducer material forming a plurality of elements and an acoustically attenuating backing material.

US 6 032 535 A discloses an arrangement for making measurements of distance and pressure within an air spring of a motor vehicle. The arrangement comprises an ultrasonic transmitter/receiver unit.

US 2017/326592 A1 discloses a phased array ultrasonic transducer comprising a bonding wire structure and a damping material surrounding the bonding wire structure and a plurality of ultrasonic transducers arranged in a matrix.

DE 198 11 982 A1 discloses an ultrasound air suspension unit comprising an elastic air suspension bellows and an ultrasound sensor for determining the spacing between the ends of the bellows, but not that a printed circuit board with an amplifying circuit configured to amplify signals of the piezoelectric element is integrated into a damping element.

JP H10 206528 A discloses an ultrasonic sensor comprising a piezoelectric vibrator and a control board. The control board is connected to an external lead wire and to the piezoelectric vibrator.

It is an object of the present invention to provide a solution that allows a shortening of the ringing time.

The object is accomplished by the subject matter of the independent claim. Advantageous developments with convenient and non-trivial further embodiments of the invention are speci-35 fied in the dependent claims. It should be noted and understood that there can be improvements and modifications made of the present invention described in detail below without departing from the scope of the invention as set forth in the accompanying claims.

The invention provides an air suspension device comprising an ultrasonic transducer device according to claim 1.

The invention has the advantage that a damping ratio of the ultrasonic transducer device may be increased by the mass of the damping plate according to the principle of a mass-spring system.

The ultrasonic transducer device comprises the piezoelectric element which may be made of lead zirconate titanate or other piezoelectric ceramic materials. The piezoelectric element is attached to the carrier element by means of the damping device. The carrier element may be a housing of an electronic device or a surface of a pneumatic spring. During an excitation of the piezoelectric element by an applied voltage, the piezoelectric element may oscillate to transmit a sound wave. To avoid an affection of the carrier element by the oscillations, the damping device may be made of a damping material that absorbs mechanical energy. The damping device may be made of polymers or silicon. After a time of excitation of the piezoelectric element by an applied voltage, the piezoelectric element may still oscillate for a ringing time. It may take some time until the oscillation has decayed under a predefined amplitude. At the end of the ringing time the piezoelectric element may be ready to detect an ultrasonic reflected signal. The ringing time depends on the energy dissipating in the damping device. To shorten the decay time it may be intended to place the damping plate into the damping device to provide two damping elements separated by the damping plate. The mass of the damping plate may influence the damping ratio of the damping device. By selecting a predefined weight of the damping plate, the damping ratio may be increased with respect to a damping device without the damping plate.

The invention also comprises embodiments that provide additional technical advantages, wherein the invention is defined by the claims.

According to the invention the damping plate comprises a damping printed circuit board. In other words, the two damping elements of the damping device are separated by the damping printed circuit board. The invention has the advantage that electronics may be placed between the two damping elements. As an example, the damping plate may comprise sensor elements placed on the damping printed circuit board.

According to the invention the damping printed circuit board comprises an amplifying circuit configured to amplify signals of the piezoelectric element. In other words, the ultrasonic transducer device comprises the amplifying circuit for increasing a voltage of a signal send upon a reception of a reflected sound wave by the piezoelectric element. The amplifying circuit is placed on the damping printed circuit board. The invention has the advantage that a distance between the piezoelectric element and the amplifying circuit is decreased compared to an amplifying circuit on the carrier element. The decreased distance allows a shortening of the length of connection wires connecting the piezoelectric element and the amplifying circuit. As the amount of noise received by the wire depends on the length of the wire, a shortening of the wire reduces the amount of noise send to the amplifying circuit. It may be possible that a reflected sound wave received by the piezoelectric element may cause a voltage of some microvolts at a surface of the piezoelectric element. The voltage may be send as a signal to a control circuit for further analysis. The voltage of the signal may be too low for further analysis. So it may be necessary to increase the voltage of the signal to a higher level using the amplifying circuit by means of a connection wire. The wire may receive noise signals which may be proportional to a length of the wire. As the amplifying circuit amplifies the signal of the piezoelectric element and the noise signals, it may be favorable to minimize the length of the wire between the piezoelectric element and the amplifying circuit. To minimize a length of a wire connecting the piezoelectric element and the amplifying circuit, the amplifying circuit may be placed on the damping printed circuit board.

According to a further embodiment of the invention the damping plate comprises weight elements. In other words, to increase the weight of the damping plate weight elements are attached to the damping plate. The invention has the advantage that the damping plate has a higher mass leading to a higher damping ratio of the ultrasonic transducer. As an example, small non-functional elements made of lead may be placed on the damping plate.

According to the invention, the carrier element is a main printed circuit board comprising connectors for supplying energy to the piezoelectric element. In other words, the damping device is attached to a printed circuit board. The main printed circuit board comprises connectors for energy supply of the ultrasonic transducer device. The embodiment has the advantage that electronics to control the piezoelectric element may be placed under or close to the damping device. As an example the carrier element may be designed as a printed circuit board wherein the printed circuit board comprises electronic devices to interpret signals of the piezoelectric element. The connectors may provide energy to supply the ultrasonic transducer device.

According to a further embodiment of the invention, the damping printed circuit board comprises a control unit configured to control the piezoelectric element. In other words, the control unit configured to generate a driving voltage for the piezoelectric element and/or to receive signals of the piezoelectric element is attached on the damping printed circuit board. The invention has the advantage that the control unit driving the piezoelectric element is close to the piezoelectric element. As an example the control unit configured to create a driving voltage for driving the piezoelectric element may be attached on the damping plate.

According to a further embodiment of the invention, the main printed circuit board comprises the control unit configured to control the piezoelectric element. In other words, the control unit configured to generate a driving voltage for the piezoelectric element and/or to receive signals of the piezoelectric element is attached on the carrier element. The invention has the advantage that the control unit driving the piezoelectric element is close to the piezoelectric element. As an example the control unit configured to create a driving voltage for driving the piezoelectric element may be attached on the carrier element.

According to the invention the damping plate is electrically connected to the piezoelectric element and the carrier element by means of wires wherein the wires are embedded in the damping device. In other words, the damping elements comprise wires to connect the damping plate with the piezoelectric element and the carrier element. The invention has the advantage that a direct connection to the piezoelectric element is provided inside the damping device. As an example the wire may comprise microwires inside the damping element. A length of the microwires may be longer than a distance between the damping plate and the piezoelectric element or the carrier element in an unstretched state. The length of the wires prevents a rupture of the wires during the oscillation.

According to a further embodiment of the invention, the damping device is made of an elastomeric compound. In other words, the damping device comprises an elastic polymer. The embodiment has the advantage that the damping device comprises a material with a higher loss factor than other common materials. As an example, the damping device may comprise silicones, rubber or fluoroelastomers.

In the following an exemplary implementation of the invention is described. The figures show:
Fig. 1 a schematic illustration of an embodiment of the ultrasonic transducer device;
Fig. 2 a schematic illustration of an oscillation of an ultrasonic transducer device without a damping mass; and
Fig. 3 a schematic illustration of an oscillation of an ultrasonic transducer device with a damping mass.

The embodiment explained in the following is a preferred embodiment of the invention. It should be noted and understood that there can be improvements and modifications made of the present invention described in detail below without departing from the scope of the invention as set forth in the accompanying claims.

In the figures elements that provide the same function are marked with identical reference signs.

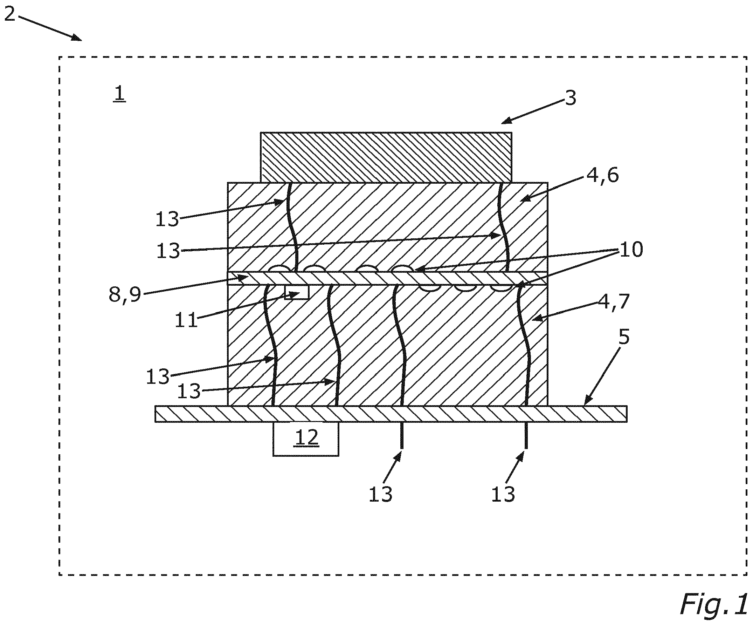

Fig. 1 shows a schematic illustration of an embodiment of the ultrasonic transducer device 1. The ultrasonic transducer device 1 may be configured to determine a distance between two objects by measuring a time of flight of a sound wave. To send the sound wave, the ultrasonic transducer device 1 comprises the piezoelectric element 3. The piezoelectric element 3 may be configured to oscillate, when it is excited by an amplified voltage. The piezoelectric element 3 may transmit the sound signal in an ultrasonic frequency range. The piezoelectric element 3 may be configured to provide a voltage, when it receives an echo of the sound signal. To prevent an excitation of the environment of the ultrasonic transducer device 1, the piezoelectric element may be placed on the damping device 4 which is coupled to the carrier element 5.

The ultrasonic transducer device 1 is placed in an air suspension device 2 like an air spring to determine a distance between two objects of the air spring. The piezoelectric element 3 may comprise a piezoceramic material. The damping device 4 may consist of an elastomeric component. The damping device 4 comprises the first damping element 6 and the second damping element 7, separated by the damping plate 8. The first damping element 6 connects the damping plate 8 and the piezoelectric element 3. The second damping element 7 connects the damping plate 8 and the carrier element 5.

The damping plate 8 may comprise the damping circuit board 9 which comprises amplifying circuit 10 and, preferably, a control unit 12. Wires 13 are placed inside the first damping element 6 and/or the second damping element 7 to provide an electric connection between the piezoelectric element 3, the damping plate 8 and the carrier element 5.

To increase the weight of the damping plate 8, the damping plate may comprise weight elements 11. The weight elements 11 may comprise lead, steel or other elements. The weight elements 11 may have a higher density than the damping element 7.

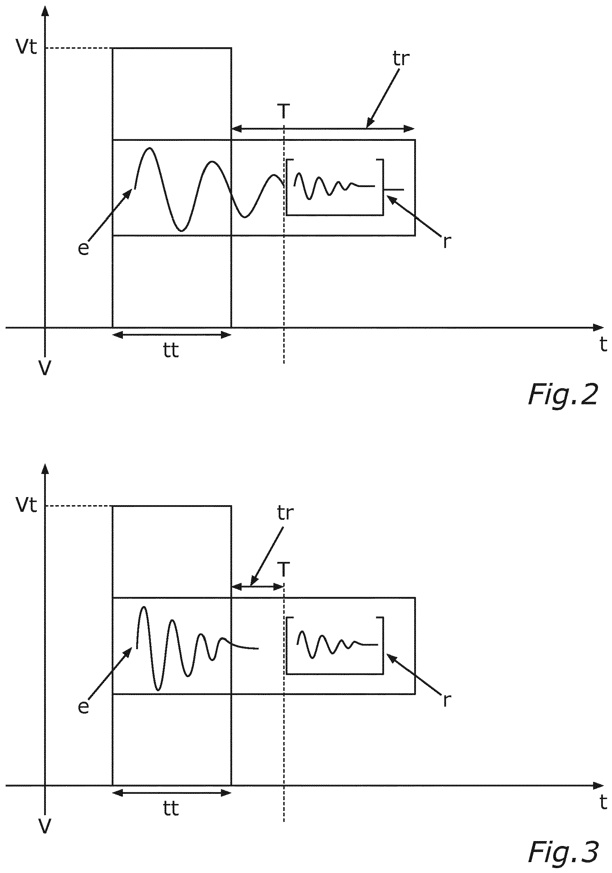

Fig. 2 shows the schematic illustration of an oscillation of an ultrasonic transducer device 1 without the damping plate 8. To transmit a sound wave, the piezoelectric element 3 may be excited by the control unit 12 by means of a voltage of excitation with an amplitude Vt. The voltage may be supplied to the piezoelectric element 3 by the control unit 12 for a predefined transmission time tt. The amplitude of the oscillation e of the piezoelectric element caused by the excitation voltage Vt decays after the transmission time tt. The decay time tr is also called the ringing time. At a moment of arrival T the piezoelectric element 3 is receiving the reflected wave. The reflected wave causes an oscillation of the piezoelectric element 3, leading to a voltage r caused by the piezoelectric effect. As an amplitude of the oscillation r is low compared to the amplitude of the decaying oscillation e it is not possible to distinguish between the oscillation originating in the ringing of the piezoelectric element 3 and the oscillation r originating in the reception of the reflected wave. Thus it is not possible to detect the moment of arrival T during the ringing time tr.

Fig. 3 shows a schematic illustration of an oscillation of an ultrasonic transducer device 1 comprising the damping plate 8. The ultrasonic transducer device 1 comprising the damping plate 8 has a shorter ringing time tr than the device without the damping plate 8 as shown in Fig. 2. When the piezoelectric element 3 receives the reflected wave at the moment of arrival T the ringing time tr has ended. As there is no overlap of the oscillations e and t, it is possible to determine the moment of arrival T.

Two problems are associated with prior art. The first problem relates to a limitation of the measurable distance, due to remnant oscillation of the ultrasonic transducer device after a transmission of a sound wave. As a transducer, the piezoceramic element oscillates when a current is passed through creating sound waves in the ultrasonic frequency spectrum (acts as signal transmitter) and when the current stops flowing it will be excited by the incoming reflected sound wave generating a voltage based on the amplitude of the echo signal. As a transmitter, after the current stops flowing there is a remnant oscillation (ringing) of the piezoceramic element which requires a certain amount of time to dampen. The ultrasonic ranging applications are based on the Time of Flight principle where the echo return time is measured and distance is calculated considering the sound propagation speed through the used medium. The remnant oscillation (ringing) reduces the minimum measurable distance because the piezoceramic element cannot detect any echo while it is still vibrating after it has transmitted the sound pulse. The piezoceramic element when is excited by sound waves will generate voltage levels in the range of µV.

The second problem is related to noise depending on a length of electrical connections between the piezoceramic element and the amplifying circuitry. Long electrical connections between the piezoceramic element and the amplifying circuitry are highly susceptible to noise. The noise is caused by a reception of electromagnetic waves from the environment through the electrical connections. The noise received by the electrical connections between the piezoceramic element and the amplifying circuitry is amplified by the amplifying circuitry the same way as the voltage originating in the piezoceramic element. Therefore electrical connections passing a whole damping device disturb the signals of the piezoceramic element.

An embodiment of the invention comprises a piezoceramic ultrasonic transducer design with an integrated damping mass. The damping mass is composed of a printed circuit board containing the signal amplification circuitry necessary to boost the piezoceramic element voltage level.

It is proposed to split the elastomeric compound in two parts and to add a damping mass between the two parts. The damping mass will reduce the remnant piezoceramic ringing which occurs after the sound pulse has been generated. A long high amplitude ringing will mask the real echo and will prevent the piezoceramic element to detect it. Damping the ringing amplitude allows for the piezoceramic element control circuitry to faster switch from transmit mode to receive mode. This is very important for short distance ultrasonic ranging applications. The damping mass is obtained by separating the elastomeric compound into 2 different sections and adding a printed circuit board between the 2 sections. Since the voltage generated by the piezoceramic element has a level in the area of µV, the printed circuit board contains the amplification circuitry necessary for boosting the piezoceramic element voltage level to a usable value. Electrical connections between the amplification circuitry, the piezoceramic element and the main printed circuit board are made with a flexible electrical connection.

The damping mass reduces the piezoceramic element ringing time allowing for shorter distance measurement in an ultrasonic ranging application.

Using the signal amplification circuitry as the damping mass allows for shortest possible electrical connections between the piezoceramic element and the amplifier circuit improving the noise immunity.

The piezoceramic element is first excited by applying a high voltage pulse. The element begins to oscillate generating a sound wave in the ultrasonic frequency range. The sound wave travels away from the surface of the piezoceramic element and is reflected back by nearby obstacles. The same piezoceramic element is used to detect the reflected wave and to calculate the distance to the object by the Time of Flight method. After the initial sound wave is generated the piezoceramic element continues to vibrate for a certain period of time because of inertia. This remnant Vibration prevents it to correctly detect the reflected wave. The proposed damping mass reduces the piezoceramic element ringing time by damping the remnant vibrations, thus allowing for faster transducer transmit-receive switching times. The noise immunity is improved by placing the amplification circuitry in the damping mass thus making the shortest possible electrical connections between the piezoceramic element and the amplification circuit.

Overall, the example shows how the time of ringing is reduced by the invention.

## Claims

1. Air suspension device (2) comprising an ultrasonic transducer device (1), the ultrasonic transducer device (1) comprising a piezoelectric element (3), a damping device (4) and a carrier element (5), the carrier element (5) being a main printed circuit board comprising connectors for supplying energy to the piezoelectric element (3),
the ultrasonic transducer device (1) further comprising a damping plate (8), and
- the damping plate (8) comprises a damping printed circuit board (9), the damping printed circuit board (9) comprises an amplifying circuit (10), configured to amplify signals of the piezoelectric element (3), wherein the damping plate (8) is electrically connected to the piezoelectric element (3) and the carrier element (5) by means of wires (13), wherein the wires (13) are embedded in the damping device (4),
- the damping device (4) is separated into a first damping element (6) and a second damping element (7) by the damping plate (8), and
- the piezoelectric element (3) is mechanically coupled to the damping plate (8) by means of the first damping element (6) of the damping device (4), and
- the damping plate (8) is mechanically coupled to the carrier element (5) by means of the second damping element (7) of the damping device (4).

2. Air suspension device (2) as claimed in claim 1,
**characterized in that**
the damping printed circuit board (9) comprises a control unit (12), configured to control the piezoelectric element (3) .

3. Air suspension device (2) as claimed in any preceding
claim, **characterized in that**
the damping plate (8) comprises one or more weight elements (11) .

4. Air suspension device (2) as claimed in any preceding
claim, **characterized in that**
the main printed circuit board comprises the control unit (12), configured to control the piezoelectric element (3).

5. Air suspension device (2) as claimed in any preceding
claim, **characterized in that**
the damping device (4) is made of an elastomeric compound.

## Patentansprüche

1. Luftfederungsvorrichtung (2), umfassend eine Ultraschallwandlervorrichtung (1), wobei die Ultraschallwandlervorrichtung (1) ein piezoelektrisches Element (3), eine Dämpfungsvorrichtung (4) und ein Trägerelement (5) umfasst, wobei das Trägerelement (5) eine gedruckte Hauptleiterplatte ist, die Anschlüsse zur Energieversorgung des piezoelektrischen Elements (3) umfasst, wobei die Ultraschallwandlervorrichtung (1) ferner eine Dämpfungsplatte (8) umfasst, und
- die Dämpfungsplatte (8) eine gedruckte Dämpfungsleiterplatte (9) umfasst, wobei die gedruckte Dämpfungsleiterplatte (9) eine Verstärkerschaltung (10) umfasst, die dazu ausgelegt ist, Signale des piezoelektrischen Elements (3) zu verstärken, wobei die Dämpfungsplatte (8) mit dem piezoelektrischen Element (3) und dem Trägerelement (5) mittels Drähten (13) elektrisch verbunden ist, wobei die Drähte (13) in die Dämpfungsvorrichtung (4) eingebettet sind,
- die Dämpfungsvorrichtung (4) durch die Dämpfungsplatte (8) in ein erstes Dämpfungselement (6) und ein zweites Dämpfungselement (7) getrennt ist, und
- das piezoelektrische Element (3) über das erste Dämpfungselement (6) der Dämpfungsvorrichtung (4) mechanisch mit der Dämpfungsplatte (8) gekoppelt ist, und
- die Dämpfungsplatte (8) über das zweite Dämpfungselement (7) der Dämpfungsvorrichtung (4) mechanisch mit dem Trägerelement (5) gekoppelt ist.

2. Luftfederungsvorrichtung (2) gemäß Anspruch 1, **dadurch gekennzeichnet, dass** die gedruckte Dämpfungsleiterplatte (9) eine Steuereinheit (12) umfasst, die zum Steuern des piezoelektrischen Elements (3) ausgelegt ist.

3. Luftfederungsvorrichtung (2) gemäß einem der vorhergehenden Ansprüche, **dadurch gekennzeichnet, dass** die Dämpfungsplatte (8) ein oder mehrere Gewichtselemente (11) umfasst.

4. Luftfederungsvorrichtung (2) gemäß einem der vorhergehenden Ansprüche, **dadurch gekennzeichnet, dass** die gedruckte Hauptleiterplatte die Steuereinheit (12) umfasst, die zum Steuern des piezoelektrischen Elements (3) ausgelegt ist.

5. Luftfederungsvorrichtung (2) gemäß einem der vorhergehenden Ansprüche, **dadurch gekennzeichnet, dass** die Dämpfungsvorrichtung (4) aus einer Elastomerverbindung besteht.

## Revendications

1. Dispositif d'amortissement pneumatique (2) comprenant un dispositif transducteur ultrasonore (1), le dispositif transducteur ultrasonore (1) comprenant un élément piézoélectrique (3), un dispositif d'amortissement (4) et un élément de support (5), l'élément de support (5) étant une carte de circuit imprimé principale comprenant des connecteurs pour alimenter en énergie l'élément piézoélectrique (3),
le dispositif transducteur ultrasonore (1) comprenant en outre une plaque amortissante (8), et
la plaque amortissante (8) comprend une carte de circuit imprimé d'amortissement (9), la carte de circuit imprimé d'amortissement (9) comprend un circuit amplificateur (10), configuré pour amplifier des signaux de l'élément piézoélectrique (3), dans lequel la plaque amortissante (8) est connectée électriquement à l'élément piézoélectrique (3) et à l'élément de support (5) au moyen de fils (13), dans lequel les fils (13) sont intégrés dans le dispositif d'amortissement (4),
le dispositif d'amortissement (4) est séparé en un premier élément d'amortissement (6) et un second élément d'amortissement (7) par la plaque amortissante (8), et
l'élément piézoélectrique (3) est couplé mécaniquement à la plaque amortissante (8) au moyen du premier élément d'amortissement (6) du dispositif d'amortissement (4), et
la plaque amortissante (8) est couplée mécaniquement à l'élément de support (5) au moyen du second élément d'amortissement (7) du dispositif d'amortissement (4).

2. Dispositif d'amortissement pneumatique (2) selon la revendication 1,
**caractérisé en ce que** la carte de circuit imprimé d'amortissement (9) comprend une unité de commande (12) configurée pour commander l'élément piézoélectrique (3).

3. Dispositif d'amortissement pneumatique (2) selon l'une quelconque des revendications précédentes, **caractérisé en ce que** la plaque amortissante (8) comprend un ou plusieurs éléments de masse (11).

4. Dispositif d'amortissement pneumatique (2) selon l'une quelconque des revendications précédentes, **caractérisé en ce que** la carte de circuit imprimé principale comprend l'unité de commande (12), configurée pour commander l'élément piézoélectrique (3).

5. Dispositif d'amortissement pneumatique (2) selon l'une quelconque des revendications précédentes, **caractérisé en ce que** le dispositif d'amortissement (4) est constitué d'un composé élastomère.
